# EUROPÄISCHE PATENTSCHRIFT

(11) **EP 1 942 178 B1**
(45) Veröffentlichungstag und Bekanntmachung des Hinweises auf die Patenterteilung: **17.03.2010**
(21) Anmeldenummer: 07100018.6
(22) Anmeldetag: 02.01.2007
(51) Int. Cl.: C11D 3/50, A61L 9/01, C09G 1/00, C11B 9/00, A61Q 13/00, A61Q 15/00

(54) **Mischungen mit 3-(4-Methyl-cyclohex-3-enyl)-butyraldehyd und 2,6-Dimethyl-7-octen-2-ol**
Mixtures of 3-(4-Methyl-cyclohex-3-enyl)-butyraldehyde and 2,6-Dimethyl-7-octen-2-ol
Mélanges de 3-(4-Méthyl-cyclohex-3-ényl)-butyraldéhyde et 2,6-Diméthyl-7-octén-2-ol

(43) Veröffentlichungstag der Anmeldung: 09.07.2008
(73) Patentinhaber: Symrise GmbH & Co. KG, 37603 Holzminden (DE)
(72) Erfinder: Eh, Marcus, 37603, Holzminden (DE); Naraschkewitz, Fred, 21244, Buchholz Nordheide (DE)
(74) Vertreter: Eisenführ, Speiser & Partner

(56) Entgegenhaltungen:
- EP-A1- 0 908 455
- DE-A1- 19 820 657

## Beschreibung

Die vorliegende Erfindung betrifft gemäß einem ersten Aspekt Mischungen umfassend oder bestehend aus bestimmten Mengen von 3-(4-Methyl-cyclohex-3-enyl)-butyraldehyd (Limonenal) sowie 2,6-Dimethyl-7-octen-2-ol (Dihydromyrc e-nol). Ein weiterer Aspekt betrifft entsprechende Produkte, welche erfindungsgemäße Mischungen umfassen, wobei es sich vorzugsweise um tensidhaltige Produkte handelt.

Die Erfindung betrifft zudem die Verwendung von Limonenal als Mittel zum Verstärken der citrischen, bergamott-artigen Kopfnote und der Natürlichkeit des Geruchs von Dihydromyrcenol.

Die Erfindung betrifft auch ein Verfahren (i) zum Verstärken der citrischen, bergamott-artigen Kopfnote und der Natürlichkeit des Geruchs von Dihydromyrcenol sowie ein Verfahren zur Herstellung einer den Geruch von Bergamottöl nachstellenden oder vermittelnden erfindungsgemäßen Mischung.

Schließlich betrifft die Erfindung auch ein Verfahren zum Versehen von (a) Haaren oder (b) textilen Fasern mit dem Geruch von Bergamottöl.

3-(4-Methyl-cyclohex-3-enyl)-butyraldehyd (Limonenal) ist bereits aus dem Stand der Technik bekannt:

In US 2,584,539 wird ausgehend von Limonen die Hydroformylierungsreaktion zu 3-(4-Methyl-cyclohex-3-enyl)-butyraldehyd beschrieben. Der Geruch von 3-(4-Methyl-cyclohex-3-enyl)-butyraldehyd wird als angenehm und langanhaltend beschrieben, Limonenal soll in Mischung mit oder als Ersatz für Hydroxycitronellal in Parfümmischungen verwendet werden. Insoweit ist anzumerken, dass Hydroxycitronellal einen blumigen Geruch besitzt.

US 2,710,825 beschreibt die Herstellung von unter anderem 3-(4-Methyl-cyclohex-3-enyl)-butyraldehyd aus Limonen. Der Geruch von 3-(4-Methyl-cyclohex-3-enyl)-butyraldehyd wird als stärker und länger anhaftend als der von Citral beschrieben und ausgeführt, dass der Butyraldehyd (Limonenal) zusätzlich eine grüne oder frische Note verleiht.

EP 011 272 A3 beschreibt die Herstellung von Aldehyden durch Hydroformylierung von Olefinen. Unter anderem wird die Herstellung von 3-(4-Methyl-cyclohex-3-enyl)-butyraldehyd durch Hydroformylierung von Limonen beschrieben. Der Geruch von 3-(4-Methyl-cyclohex-3-enyl)-butyraldehyd wird als Agrumen- und Rhabarber-Note angegeben. Erwähnt wird weiter, dass diese Verbindung außer in der Feinparfümerie beispielsweise auch zur Parfümierung von Seifen, Reinigungs- und Waschmitteln oder Weichspülern dienen kann.

DE 198 20 657 betrifft Riechstoff- zusammensetzungen, die 30 - 70 Gew.-% 2-Methylen-3-(4-methylcyclohex-3-enyl)-butanal und 10 - 30 Gew.-% Limonenaldehyd enthalten.

In eigenen Untersuchungen zeigte 3-(4-Methyl-cyclohex-3-enyl)-butyraldehyd (Limonenal) einen sehr intensiven, modernen, frischen, grünen, aldehydigen, etwas fettigen und citrusartigen Geruch, der mit blumig-fruchtigen Noten gepaart ist. Der grüne citrusartige Geruch erinnert an die Schale von Citrusfrüchten, im speziellen Zitronen und Limonen.

Dihydromyrcenol ist ein häufiger Bestandteil von Parfümkompositionen (EP 0 908 455); er wird insbesondere in modernen Parfümölen zur Nachstellung (Nachahmung) des Geruchs von Bergamottöl eingesetzt. Dihydromyrcenol ist eine farblose Flüssigkeit, die (wie Bergamottöl) einen frischen Citrus-artigen Geruch und eine Lavendel-Note aufweist. Dihydromyrcenol vermittelt jedoch nicht den geruchlich komplexen Eindrucks des natürlichen ätherischen Bergamottöls, wie er in der Parfümindustrie insbesondere für klassische Parfümöle häufig bevorzugt wird.

In der Praxis wird deshalb der Geruch von Bergamottöl alternativ sehr häufig durch Mischungen nachgeahmt, die Linalylacetat und Linalool umfassen. Diese beiden Verbindungen sind die Hauptbestandteile des natürlichen Bergamottöls. Bergamottöl soll in der Praxis aus einer Reihe von Gründen geruchlich nachgestellt, d. h. durch synthetische Riechstoffmischungen ersetzt werden:
- Natürliches Bergamottöl wird nur in geringen Mengen produziert und ist daher vergleichsweise teuer; der kommerzielle Anbau der Bergamotte -Frucht erfolgt nur entlang eines schmalen Küstenstreifens in Kalabrien (Italien).
- Die geruchliche Note natürlichen Bergamottöls ist natürlichen Schwankungen unterworfen; die Parfümindustrie verlangt jedoch nach eindeutig reproduzierbaren geruchlichen Noten.
- Natürliches Bergamottöl neigt aufgrund der Anwesenheit von Dihydrocuminalkohol (einem weiteren Bestandteil des Bergamottöls) zur Verfärbung im Zuge der Lagerung.
- Natürliches Bergamottöl neigt aufgrund der Anwesenheit von Linalool (Hauptbestandteil, siehe oben) zur Sensibilisierung der Haut, vgl. zu Linalool insbesondere die Richtlinie 2003/15 EG sowie SÖFW-Journal, 130, 4-2004, Seiten 58 bis 62.

Aufgrund der allergenen Eigenschaften des im Bergamottöl als Hauptbestandteil vorkommenden Linalool erscheinen in zunehmendem Maße auch die Mischungen auf Basis von Linalylacetat und Linalool problematisch, welche industriell zur Nachahmung des Geruches von Bergamottöl eingesetzt werden.

Dihydromyrcenol, welches wie oben bereits erwähnt, als alternative Substanz zur Nachahmung des Geruches von Bergamottöl eingesetzt wird, hat sich in der parfümistischen Praxis bislang nicht als Mittel zur Erzeugung eines Bergamottöl-Geruches gegen Mischungen auf Basis von Linalylacetat und Linalool durchsetzen können, obwohl es vorteilhafte Eigenschaften besitzt und insbesondere weder zur Verfärbung neigt noch sensibilisierend (allergen) wirkt.

Es war deshalb die primäre Aufgabe der vorliegenden Erfindung, einen Riechstoff oder eine Riechstoffmischung (Parfümkomposition) anzugeben, die den Geruch von Bergamottöl vermittelt oder (neben weiteren Geruchsnoten) umfasst. Vorzugsweise sollte der anzugebende Riechstoff oder die anzugebende Riechstoffmischung den geruchlich komplexen Eindruck eines natürlichen ätherischen Bergamottöls nachahmen (nachstellen).

Erfindungsgemäß wird diese primäre Aufgabe gelöst durch eine Mischung umfassend oder bestehend aus
7,5 bis 27,5 Gewichtsteilen 3-(4-Methyl-cyclohex-3-enyl)-butyraldehyd (Limonenal) und
92,5 bis 72,5 Gewichtsteilen 2,6-Dimethyl-7-octen-2-ol (Dihydromyrcenol),
wobei die Summe der Gewichtsteile an 3-(4-Methyl-cyclohex-3-enyl)-butyraldehyd und 2,6-Dimethyl-7-octen-2-ol 100 beträgt.

Die in erfindungsgemäßen Parfümkompositionen enthaltenen Verbindungen Limonenal und Dihydromyrcenol können jeweils als reine Enantiomere oder als Mischungen dieser Enantiomere vorliegen; Limonenal wird vorzugsweise als Enantiomerenmischung eingesetzt.

Vorzugsweise umfasst oder besteht die erfindungsgemäße Mischung aus 12,5 bis 20 Gewichtsteilen 3 -(4-Methyl-cyclohex-3-enyl)-butyraldehyd (Limonenal) und
87,5 bis 80 Gewichtsteilen 2,6-Dimethyl-7-octen-2-ol (Dihydromyrcenol).

In eigenen Untersuchungen zu Mischungen bestehend aus Limonenal und Dihydromyrcenol hat sich gezeigt, dass zu Dihydromyrcenol zugesetztes Limonenal in einem Anteil von 7,5 bis 27,5 Gew.-%, bevorzugt 12,5 bis 20 Gew.-% und ganz besonders bevorzugt 13 bis 17 Gew.-%, bezogen auf die Gesamtmenge an Dihydromyrcenol und Limonenal, zu einer überraschenden Verstärkung der citrischen, bergamott-artigen Kopfnote des Dihydromyrcenol und gleichzeitig zu einer Steigerung der Natürlichkeit des Geruches führt. Insbesondere in den bevorzugten Mengenbereichen (12,5 bis 20 Gewichtsteile, vorzugsweise 13 bis 17 Gewichtsteile) führt der Zusatz von Limonenal zu Dihydromyrcenol zu dem geruchlich komplexen Eindruck eines natürlichen ätherischen Bergamottöls. Vorteilhafterweise ist überdies bei Einstellung der besagten Gewichtsteile die als wenig vorteilhaft empfundene fettige Note des Limonenals (die bei sensorischer Untersuchung reinen Limonenals deutlich wahrgenommen wird,) nicht mehr wahrnehmbar.

In der nachfolgenden Tabelle finden sich Angaben zu Geruchsbeschreibungen von reinem Dihydromyrcenol (Nr. 1) und reinem Limonenal (Nr. 2) sowie zu ausgewählten Mischungen von Dihydromyrcenol und Limonenal (Nr. 3, 4, 5 und 6).

| Nr. | Anteil Dihydromyrcenol | Anteil Limonenal | Geruchsbeschreibung |
|---|---|---|---|
| 1 | 100% | 0% | Frisch, Citrus, blumig |
| 2 | 0% | 100% | Frisch, Citrus, grün, aldehydig etwas fettig mit blumigen Nuancen |
| 3 | 75% | 25% | Frisch, Citrus mit einer bergamottartigen Natürlichkeit, aldehydig |
| 4 | 85% | 15% | Sehr schöner, frischer und intensiver citrusartiger Geruch mit sehr ausgeprägter Natürlichkeit, der dem von Bergamottöl nahezu entspricht. Unterstützt wird die Natürlichkeit des Geruches durch die nuancierten blumigen Aspekte. |
| 5 | 90% | 10% | Frische, natürliche Citrusnote mit blumigen, bergamott-artigen Aspekten |
| 6 | 95% | 5% | Frische, etwas metallische Citrusnote, ohne Ausstrahlung |

Man erkennt, dass insbesondere bei Einsatz von 10 und 15 Gew.-% Limonenal (bezogen auf die Gesamtmenge an Dihydromyrcenol und Limonenal in der Mischung) eine besondere Natürlichkeit festgestellt wurde. Insgesamt ist es vorteilhaft, wenn in einer erfindungsgemäßen Mischung 12,5 bis 20 Gewichtsteile Limonenal neben 87,5 bis 80 Gewichtsteilen Dihydromyrcenol vorliegen (wie oben ausgeführt).

Bevorzugte erfindungsgemäße Mischungen sind Parfümkompositionen. Solche Parfümkompositionen umfassen oder bestehen vorzugsweise aus:
3-(4-Methyl-cyclohex-3-enyl)-butyraldehyd (Limonenal),
2,6-Dimethyl-7-octen-2-ol (Dihydromyrcenol)
sowie einem, mehreren oder sämtlichen weiteren Bestandteilen ausgewählt aus der Gruppe bestehend aus:
- Riechstoffe, vorzugsweise in einer Menge von 100 oder mehr Gewichtsteilen, und
- Fixateure.

Die gleichzeitige Anwesenheit von einem oder mehreren weiteren Riechstoffen und Fixateuren in einer erfindungsgemäßen Parfümkomposition ist bevorzugt. Bevorzugte Parfümkompositionen umfassen neben Limonenal und Dihydromyrcenol einen gleichen oder höheren Gewichtsanteil an einem oder mehreren weiteren Riechstoffen.

Der Einsatz eines Fixateurs in einer bevorzugten erfindungsgemäßen Mischung (Parfümkomposition) erhöht die Haftfestigkeit der eingesetzten Riechstoffe, sei es durch deren Dampfdruckerniedrigung oder mittels geruchlicher Verstärkung der (anderen) Riechstoffe (z.B. Absenkung des Schwellenwertes).

Eine besonders bevorzugte erfindungsgemäße Mischung (vorzugsweise eine erfindungsgemäße Mischung, bei der es sich eine Parfümkomposition handelt), umfasst eine Gesamtmenge an 3-(4-Methyl-cyclohex-3-enyl)-butyraldehyd (Limonenal) und 2,6-Dimethyl-7-octen-2-ol (Dihydromyrcenol), welche eine Bergamott-Geruchsnote vermittelt, verstärkt oder modifiziert.

Bevorzugte erfindungsgemäße Mischungen (insbesondere Parfümkompositionen) umfassen keinen Dihydrocuminalkohol und/oder kein Linalool und/oder kein 3-(4-Methyl-cyclohexyl)-butyraldehyd. Zu den Nachteilen, welche mit dem Einsatz von Dihydrocuminalkohol und/oder Linalool verbunden sind, siehe oben. -3-(4-Methyl-cyclohexyl)-butyraldehyd ist ein unerwünschtes Nebenprodukt bei der Herstellung von Limonenal aus Limonen.

Erfindungsgemäße Mischungen und insbesondere erfindungsgemäße Parfümkompositionen können hervorragend in eine Reihe von Produkten eingearbeitet bzw. auf solche Produkte appliziert werden. Die Erfindung betrifft daher auch Produkte umfassend eine erfindungsgemäße Mischung (insbesondere Parfümkomposition).

Insbesondere sind erfindungsgemäße Mischungen (insbesondere Parfümkompositionen) für den Einsatz in tensidhaltigen Produkten geeignet. Die Erfindung betrifft daher auch tensidhaltige Produkte umfassend eine erfindungsgemäße Mischung (vorzugsweise Parfümkomposition). Es besteht ein ständiger Bedarf an Riechstoffmischungen mit einer Citruskopfnote und ausgeprägter Natürlichkeit, wobei die Riechstoffmischungen vorzugsweise den Geruch von Bergamottöl nachahmen sollen, insbesondere für die Parfümierung von tensidhaltigen Formulierungen, wie zum Beispiel Reinigungsmitteln.

Insbesondere sofern tensidhaltige Produkte zur Behandlung von Haaren oder textilen Fasern vorgesehen sind, ist eine weitere wichtige anwendungstechnische Anforderung die Substantivität gegenüber dem bzw. Retention am Substrat, insbesondere also Haaren oder textilen Fasern. Die Bedeutung der Substantivität und der Retention wird z.B. in EP 1 201 738 A1 ausführlich dargelegt, vgl. dort die Abschnitte [0004]-[0005]. Gesucht werden daher auch generell Riechstoffe mit hoher Substantivität und/oder Retention.

Die erfindungsgemäßen Mischungen (insbesondere Parfümkompositionen) sind zum Einsatz in tensidhaltigen Produkten, welche die oben genannten Anforderungen erfüllen, besonders gut geeignet.

Bevorzugt ist es, wenn ein erfindungsgemäßes (vorzugsweise tensidhaltiges) Produkt eines der folgenden ist:
- ein saures, alkalisches oder neutrales Reinigungsmittel, vorzugsweise ausgewählt aus der Gruppe bestehend aus Allzweckreinigern, Fußbodenreinigern, Fensterglasreinigern, Geschirrspülmittel, Bad- und Sanitärreinigern, Scheuermilch, festen und flüssigen WC-Reinigern, pulver- und schaumförmigen Teppichreinigern, flüssigen Waschmitteln, pulverförmigen Waschmitteln, Wäschevorbehandlungsmitteln wie Bleichmittel, Einweichmittel und Fleckenentfernern, Wäscheweichspülern, Waschseifen, Waschtabletten, Desinfektionsmitteln, Oberflächendesinfektionsmitteln,
- ein Luftverbesserer in flüssiger, gelartiger oder auf einem festen Träger aufgebrachter Form oder als Aerosolspray,
- ein Wachs oder eine Politur, vorzugsweise ausgewählt aus der Gruppe bestehend aus Möbelpolituren, Fußbodenwachsen und Schuhcremes, oder
- ein Körperpflegemittel, vorzugsweise ausgewählt aus der Gruppe bestehend aus festen und flüssigen Seifen, Duschgelen, Shampoos, Rasierseifen, Rasierschäumen, Badeölen, kosmetischen Emulsionen vom Öl-in-Wasser-, vom Wasser-in-Öl- und vom Wasser-in-Öl-in-Wasser-Typ wie z.B. Hautcremes- und - lotionen, Gesichtscremes und -lotionen, Sonnenschutzcremes- und -lotionen, After-sun-cremes und -lotionen, Handcremes und -lotionen, Fußcremes und - lotionen, Enthaarungscremes und -lotionen, After-shave-Cremes und -lotionen, Bräunungscremes und -lotionen, Haarpflegeprodukten wie z.B. Haarsprays, Haargelen, Haarlotionen, Haarspülungen, permanenten und semipermanenten Haarfärbemitteln, Haarverformungsmitteln wie Kaltwellen und Haarglättungsmitteln, Haarwässern, Haarcremes und -lotionen, Deodorantien und Antiperspirantien wie z.B. Achselsprays, Roll-ons, Deosticks, Deocremes und Produkten der dekorativen Kosmetik.

Zutaten, mit denen die erfindungsgemäßen Mischungen kombiniert werden können, sind beispielsweise:

Konservierungsmittel, Abrasiva, Antiakne-Mittel, Mittel gegen Hautalterung, anitbakterielle Mittel, Anticellulitis-Mittel, Antischuppen-Mittel, entzündungshemmende Mittel, irritationsverhindernde Mittel, irritationshemmende Mittel, antimikrobielle Mittel, Antioxidantien, Adstringentien, schweisshemmende Mittel, antiseptische Mittel, Antistatika, Binder, Puffer, Trägermaterialien, Chelatbildnder, Zellstimulantien, reinigende Mittel, pflegende Mittel, Enthaarungsmittel, oberflächenaktive Substanzen, deodorierende Mittel, Antiperspirantien, Weichmacher, Emulgatoren, Enzyme, ätherische Öle, Fasern, Filmbildner, Fixateure, Schaumbildner, Schaumstabilisatoren, Substanzen zum Verhindern des Schäumens, Schaumbooster, Fungizide, gelierende Mittel, gelbildende Mittel, Haarpflegemittel, Haarverformungsmittel, Haarglättungsmittel, feuchtigkeitsspendende Mittel, anfeuchtende Substanzen, feuchthaltende Substanzen, bleichende Mittel, stärkende Mittel, fleckenentfernende Mittel, optisch aufhellende Mittel, imprägnierende Mittel, schmutzabweisende Mittel, reibungsverringernde Mittel, Gleitmittel, Feuchtigkeitscremes, Salben, Trübungsmittel, plastifizierende Mittel, deckfähige Mittel, Politur, Glanzmittel, Polymere, Pulver, Proteine, rückfettende Mittel, abschleifende Mittel, Slilcone, hautberuhigende Mittel, hautreinigende Mittel, hautpflegende Mittel, hautheilende Mittel, Hautaufhellungsmittel, hautschützende Mittel, hauterweichende Mittel, kühlende Mittel, hautkühlende Mittel, wärmende Mittel, hautwärmende Mittel, Stabilisatoren, UV-absorbierende Mittel, UV-Filter, Waschmittel, Weichspüler, suspendierende Mittel, Hautbräunungsmittel, Verdickungsmittel, Vitamine, Öle, Wachse, Fette, Phospholipide, gesättigte Fettsäuren, ein- oder mehrfach ungesättigte Fettsäuren, α-Hydroxysäuren, Polyhydroxyfettsäuren, Verflüssiger, Farbstoffe, farbschützende Mittel, Pigmente, Antikorrosiva, Aromen, Geschmackstoffe, Riechstoffe, Polyole, Tenside, Elektrolyte, organische Lösungsmittel oder Silikonderivate.

Die vorliegende Erfindung betrifft auch ein Verfahren zum Verstärken der citrischen, bergamott-artigen Kopfnote und der Natürlichkeit des Geruchs von 2,6-Dimethyl-7-octen-2-ol (Dihydromyrcenol). Die Erfindung betrifft zudem ein Verfahren zur Herstellung einer den Geruch von Bergamottöl nachstellenden oder vermittelnden erfindungsgemäßen Mischung (insbesondere Parfümkomposition), vorzugsweise einer oben als bevorzugt bezeichneten Mischung. Die erfindungsgemäßen Verfahren umfassen die folgenden Schritte:
- Bereitstellen von 3-(4-Methyl-cyclohex-3-enyl)-butyraldehyd (Limonenal) und 2,6-Dimethyl-7-octen-2-ol (Dihydromyrcenol),
- Vermischen von
   7,5 bis 27,5 Gewichtsteilen 3-(4-Methyl-cyclohex-3-enyl)-butyraldehyd (Limonenal) und
   92,5 bis 72,5 Gewichtsteilen 2,6-Dimethyl-7-octen-2-ol (Dihydromyrcenol), vorzugsweise
   12,5 bis 20 Gewichtsteilen 3-(4-Methyl-cyclohex-3-enyl)-butyraldehyd (Limonenal) und
   87,5 bis 80 Gewichtsteilen 2,6-Dimethyl-7-octen-2-ol (Dihydromyrcenol),
   wobei die Summe der Gewichtsteile an 3-(4-Methyl-cyclohex-3-enyl)-butyraldehyd und 2,6-Dimethyl-7-octen-2-ol 100 beträgt.

In Zusammenhang mit der vorliegenden Erfindung steht die Verwendung von 3-(4-Methyl-cyclohex-3-enyl)-butyraldehyd (Limonenal) als Mittel zum Verstärken der citrischen, bergamott-artigen Kopfnote und der Natürlichkeit des Geruchs von 2,6-Dimethyl-7-octen-2-ol (Dihydromyrcenol).

Eine erfindungsgemäße Mischung umfassend oder bestehend aus 7,5 bis 27,5 Gewichtsteilen 3-(4-Methyl-cyclohex-3-enyl)-butyraldehyd (Limonenal)
und
92,5 bis 72,5 Gewichtsteilen 2,6-Dimethyl-7-octen-2-ol (Dihydromyrcenol),
vorzugsweise
12,5 bis 20 Gewichtsteilen 3-(4-Methyl-cyclohex-3-enyl)-butyraldehyd (Limonenal) und
87,5 bis 80 Gewichtsteilen 2,6-Dimethyl-7-octen-2-ol (Dihydromyrcenol),
kann insbesondere als Riechstoffmischung zur Nachahmung des Geruches von Bergamottöl (vorzugsweise zur Nachahmung des geruchlich komplexen Eindrucks eines natürlichen ätherischen Bergamottöls) verwendet werden.

Die Erfindung betrifft auch die Verwendung einer erfindungsgemäßen Mischung (insbesondere Parfümkomposition)
- zum Nachstellen oder Vermitteln des Geruches von Bergamottöl oder
- als Mittel zum Versehen von (a) Haaren oder (b) textilen Fasern mit dem Geruch von Bergamottöl, vorzugsweise mit dem komplexen Geruchseindruck eines natürlichen ätherischen Bergamottöls.

Vorzugsweise wird im Rahmen der erfindungsgemäßen Verwendung die zu verwendende Mischung (vorzugsweise Parfümkomposition) als Bestandteil eines erfindungsgemäßen Produktes eingesetzt.

Schließlich betrifft die Erfindung auch ein Verfahren zum Versehen von (a) Haaren oder (b) textilen Fasern mit dem Geruch von Bergamottöl, vorzugsweise mit dem komplexen Geruchseindruck eines natürlichen ätherischen Bergamottöls. Ein solches Verfahren umfasst die folgenden Schritte:
- Bereitstellen einer erfindungsgemäßen Mischung (vorzugsweise einer oben als bevorzugt bezeichneten Mischung) oder eines erfindungsgemäßen Produktes (vorzugsweise eines oben als bevorzugt bezeichneten Produktes),
- Applizieren der besagten Mischung bzw. des besagten Produktes auf das Haar oder die textilen Fasern.

Eine besonders bevorzugte erfindungsgemäße Mischung, die für die erfindungsgemäßen Verwendungen bzw. die entsprechenden Verfahren besonders geeignet ist, ist eine Lösung umfassend:
(a) Wasser,
(b) 7,5 bis 27,5 Gewichtsteile 3-(4-Methyl-cyclohex-3-enyl)-butyraldehyd (Limonenal) und
   92,5 bis 72,5 Gewichtsteile 2,6-Dimethyl-7-octen-2-ol (Dihydromyrcenol),
   vorzugsweise
   12,5 bis 20 Gewichtsteile 3-(4-Methyl-cyclohex-3-enyl)-butyraldehyd (Limonenal) und
   87,5 bis 80 Gewichtsteilen 2,6-Dimethyl-7-octen-2-ol (Dihydromyrcenol), sowie
(c) ein oder mehrere Tenside,
wobei die Konzentration an Limonenal in der Lösung im Bereich von 10⁻⁷ bis 10⁻¹ Gew.-% liegt. Weitere Riechstoffe und/oder sonstige übliche Zusatzstoffe können vorhanden sein.

Die oben gewürdigten Dokumente aus dem Stand der Technik geben keine Hinweise zu den besonderen olfaktorischen Effekten des 3-(4-Methyl-cyclohex-3-enyl)-butyraldehyds (Limonenal) in Kombination mit Dihydromyrcenol insbesondere im Zusammenhang mit vorzugsweise wässrigen, tensidhaltigen Produkten. Überraschenderweise wird in den erfindungsgemäßen Verwendungen, Verfahren, Mischungen (insbesondere Parfümkompositionen) und Produkten auf Grund des gemeinsamen Einsatztes von Limonenal und Dihydromyrcenol ein geruchlich komplexer Eindruck erreicht, wie er sonst nur durch natürliche ätherische Bergamottöle erreicht werden kann.

Die erfindungsgemäße Mischung (vorzugsweise Parfümkomposition) kann in einer Vielzahl von Produkten verwendet werden. Der pH-Wert einer wässrigen, die erfindungsgemäße Mischung (vorzugsweise Parfümkomposition) enthaltenden Formulierung ist nicht kritisch, da sowohl Dihydromyrcenol als auch Limonenal in schwach sauren als auch basischen Medien stabil sind. Es hat sich allerdings gezeigt, dass Limonenal (insbesondere in Anwendungen / Formulierungen mit basischem pH-Wert) ein besonders ausgeprägtes Blooming aufweist und eine Erhöhung des Blooming von Limonenal bewirkt, vorzugsweise liegt der pH-Wert in erfindungsgemäßen wässrigen, vorzugsweise tensidhaltigen Produkten dann im Bereich von pH 8 bis 11.

Beispiele für Riechstoffe, mit denen Limonenal und Dihydromyrcenol vorteilhaft kombiniert werden können, finden sich z.B. in S. Arctander, Perfume and Flavor Materials, Vol. I und II, Montclair, N. J., 1969, Selbstverlag oder K. Bauer, D. Garbe und H. Surburg, Common Fragrance and Flavor Materials, 4rd. Ed., Wiley-VCH, Weinheim 2001.

In erfindungsgemäßen Mischungen (insbesondere Parfümkompositionen) beträgt die eingesetzte Menge des 3-(4-Methyl-cyclohex-3-enyl)-butyraldehyds (Limonenal) vorzugsweise 0,1 bis 10 Gew.-%, bevorzugt 0,5 bis 5 Gew.-%, bezogen auf die gesamte Mischung. Die eingesetzte Menge an Dihydromyrcenol ergibt sich aus den obigen Angaben zu erfindungsgemäßen Mischungen, wobei auch insoweit die Angaben zu bevorzugten Mischungen zutreffen.

Erfindungsgemäße Mischungen (insbesondere Parfümkompositionen) auf Basis von Limonenal und Dihydromyrcenol enthaltenden Parfümölen können in konzentrierter Form, in Lösungen oder in den unten beschriebenen modifizierten Formen verwendet werden z.B. für die Parfümierung von sauren, alkalischen und neutralen Reinigungsmitteln, wie z.B. pulver- und schaumförmigen Teppichreinigern, flüssigen Waschmitteln, pulverförmigen Waschmitteln, Wäschevorbehandlungsmitteln wie Bleichmittel, Einweichmittel und Fleckenentferner, Wäscheweichspülern, Waschseifen, Waschtabletten, sowie Körperpflegemitteln wie z.B. festen und flüssigen Seifen, Duschgelen, Shampoos, kosmetischen Emulsionen vom Öl-in-Wasser-, vom Wasser-in-Öl- und vom Wasser-in-Öl-in-Wasser-Typ Haarpflegeprodukten wie z.B. Haarsprays, Haargelen, festigenden Haarlotionen, Haarspülungen, permanenten und semipermanenten Haarfärbemitteln, Haarverformungsmitteln wie Kaltwellen und Haarglättungsmitteln, Haarwässern, Haarcremes und -lotionen.

Die erfindungsgemäßen Mischungen (insbesondere Parfümkompositionen) enthaltenden Parfümöle können in flüssiger Form, unverdünnt oder mit einem Lösungsmittel verdünnt für Parfümierungen eingesetzt werden. Geeignete Lösungsmittel hierfür sind z.B. Ethanol, Isopropanol, Diethylenglycolmonoethylether, Glycerin, Propylenglycol, 1,2-Butylenglycol, Dipropylenglycol, Diethylphthalat, Triethylcitrat, Isopropylmyristat usw.

Des Weiteren können die erfindungsgemäßen Mischungen (insbesondere Parfümkompositionen) enthaltenden Parfümöle an einem Trägerstoff adsorbiert sein, der sowohl für eine feine Verteilung der Riechstoffe im Produkt als auch für eine kontrollierte Freisetzung bei der Anwendung sorgt. Derartige Träger können poröse anorganische Materialien wie Leichtsulfat, Kieselgele, Zeolithe, Gipse, Tone, Tongranulate, Gasbeton usw. oder organische Materialien wie Hölzer und Cellulose-basierende Stoffe sein.

Die erfindungsgemäßen Mischungen (insbesondere Parfümkompositionen) enthaltenden Parfümöle können auch mikroverkapselt, sprühgetrocknet, als Einschluss-Komplexe oder als Extrusions-Produkte vorliegen und in dieser Form dem zu parfümierenden Produkt hinzugefügt werden.

Gegebenenfalls können die Eigenschaften der derart modifizierten Parfümöle durch sog. "Coaten" mit geeigneten Materialien im Hinblick auf eine gezieltere Duftfreisetzung weiter optimiert werden, wozu vorzugsweise wachsartige Kunststoffe wie z.B. Polyvinylalkohol verwendet werden.

Die Mikroverkapselung der Parfümöle kann beispielsweise durch das sogenannte Koazervationsverfahren mit Hilfe von Kapselmaterialien z.B. aus polyurethan-artigen Stoffen oder Weichgelatine, erfolgen. Die sprühgetrockneten Parfümöle können beispielsweise durch Sprühtrocknung einer das Parfümöl enthaltenden Emulsion bzw. Dispersion hergestellt werden, wobei als Trägerstoffe modifizierte Stärken, Proteine, Dextrine und pflanzliche Gummen verwendet werden können. Einschluss-Komplexe können z.B. durch Eintragen von Dispersionen von dem Parfümöl und Cyclodextrinen oder Harnstoffderivaten in ein geeignetes Lösungsmittel, z.B. Wasser, hergestellt werden. Extrusions-Produkte können durch Verschmelzen der Parfümöle mit einem geeigneten wachsartigen Stoff und durch Extrusion mit nachfolgender Erstarrung, ggf. in einem geeigneten Lösungsmittel, z.B. Isopropanol, erfolgen.

Bevorzugte Produkte, die im Rahmen der vorliegenden Erfindung eingesetzt werden können, sind (a) Parfümölmischungen für tensidhaltige Produkte (insbesondere Formulierungen), wie z.B. Reinigungsmittel, Waschmittel, Weichspüler sowie Körperpflegemittel sowie (b) die entsprechenden tensidhaltigenProdukte (insbesondere Formulierungen) selbst.

Die tensidhaltigen Produkte (insbesondere Formulierungen), die im Rahmen der vorliegenden Erfindung eingesetzt werden können, umfassen allgemein Substanzen aus der Klasse der anionischen Tenside, wie zum Beispiel Carboxylate, Sulfate, Sulfonate und Phosphate, der kationischen Tenside, wie zum Beispiel quartäre Ammoniumsalze, der amphoteren Tenside, wie zum Beispiel Betaine, und der nichtionischen Tenside, wie zum Beispiel Ethoxylate und Propoxylate.

Unter den anionischen Tensiden sind die Sulfate und Sulfonate bevorzugt. Bei den Sulfaten sind solche mit 12 bis 18 Kohlenstoffatomen und einem Ethoxylierungsgrad von 1 bis maximal 5 bevorzugt. Insbesondere bevorzugt ist Natriumlaurylethersulfat, vorzugsweise mit einem mittleren Ethoxylierungsgrad von 2 bis 4.

Unter den Sulfonaten sind insbesondere die linearen Natriumalkylbenzolsulfonate mit durchschnittlich ca. 12 Kohlenstoffatomen in der Alkylkette, wobei diese aus homologen Resten mit 10 bis 14 Kohlenstoffatomen bestehen ("Dodecylbenzolsulfonat"), bevorzugt.

Aus der Gruppe der nichtionischen Tenside sind die ethoxylierten Fettalkohole, die durch Ethoxylierung von Alkoholen mit 12 bis 18 Kohlenstoffatomen erhalten werden (Fettalkoholethoxylate mit 12 bis 18 C-Atomen), bevorzugt. Der Ethoxylierungsgrad kann dabei in weiten Grenzen variieren, besonders bevorzugt sind jedoch Produkte mit einem durchschnittlichen Ethoxylierungsgrad von 5 bis 10, insbesondere von 7 Mol addiertem Ethylenoxid pro Mol Fettalkohol.

Unter den Betainen sind insbesondere solche vom Säureamidtyp mit der aufgeführten Struktur bevorzugt.

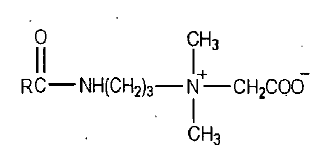

Ein bevorzugter Rest RC=0 ist dabei der Schnitt aus den Fettsäuren des Kokosöls, in dem die Laurylsäure mit 45-50% der Hauptbestandteil ist.

In Kombination mit ausgewählten Tensiden sind die günstigen Eigenschaften der erfindungsgemäßen Mischung (insbesondere Parfümkomposition) auf Basis von Limonenal und Dihydromyrcenol überraschend stark ausgeprägt. Ein entsprechendes erfindungsgemäßes tensidhaltiges Produkt umfasst vorzugsweise neben Limonenal und Dihydromyrcenol (in den erfindungsgemäßen Gewichtsve r-hältnissen) ein oder mehrere Tenside, die ausgewählt sind aus der Gruppe bestehend aus:
- Lineare Alkylbenzolsulfonate (insbesondere die oben genannten, wie z.B. die linearen Natriumalkylbenzolsulfonate),
- Fettalkoholethoxylate mit 12-18 C-Atomen (insbesondere die oben genannten, also z.B. die mit dem oben als bevorzugt gekennzeichneten Ethoxylierungsgrad),
- Laurylethersulfate (insbesondere die oben genannten, also z.B. das oben genannte Natriumlaurylethersulfat) und
- Betaine (insbesondere die oben genannten, also z.B. Betaine vom Säureamidtyp mit der oben aufgeführten Struktur).

Lineare Alkylbenzolsulfonate und Fettalkoholethoxylate mit 12-18 C-Atomen werden dabei vorzugsweise nebeneinander eingesetzt, insbesondere in Vollwaschmittelpulvern.

Ebenso werden Laurylethersulfate (insbesondere das oben genannte Natriumlaurylethersulfat) und Betaine (insbesondere Betaine vom Säureamidtyp mit der oben aufgeführten Struktur) vorzugsweise nebeneinander eingesetzt, insbesondere in Feinwaschmitteln, Shampoos und Duschgelen.

Die Konzentration der oberflächenaktiven Stoffe in den erfindungsgemäßen tensidhaltigen Produkten ist in der Regel unkritisch. Bevorzugte Konzentrationen sind abhängig vom Typ des Tensids und der jeweiligen Anwendung. Sie können zum Beispiel in speziellen Bleichprodukten kleiner 1 Gew.-%, in Seifen oder Waschpulver aber größer 99 Gew.-% sein.

Für bestimmte Anwendungsgebiete sind in erfindungsgemäßen tensidhaltigen Produkten bestimmte Kombinationen und Konzentrationen bevorzugt. So sind erfindungsgemäße Mischungen (Waschmittelformulierungen) bevorzugt, in denen der Anteil an linearen Alkylbenzolsulfonaten im Bereich von 7 - 10 Gew.-% und/oder der Anteil an Fettalkoholethoxylaten mit 12-18 C-Atomen im Bereich von 3 - 6 Gew.-% liegt, jeweils bezogen auf die Gesamtmasse der Mischung. Zudem sind erfindungsgemäße Mischungen (Formulierungen für Feinwaschmittel, Shampoos und Duschgele) bevorzugt, in denen der Anteil an Natriumlaurylethersulfat im Bereich von 7 - 13 Gew.-% und/oder der Anteil an Betain (insbesondere Betain vom Säureamidtyp mit der oben aufgeführten Struktur) im Bereich von 1 - 3 Gew.-% liegt, jeweils bezogen auf die Gesamtmasse der Mischung.

Bei Anwendung erfindungsgemäßer tensidhaltiger Produkte ist die Substantivität des 3-(4-Methyl-cyclohex-3-enyl)-butyraldehyds (Limonenal) und des Dihydromyrcenol auf Haaren und textilen Fasern derart ausgeprägt, dass der Eindruck entsteht, dass die vorhandenen Tenside das Limonenal und das Dihydromyrcenol zwar zunächst in die wässrige Phase hineinbringen, diese Verbindung jedoch in Gegenwart von Haaren oder textilen Fasern aus der wässrigen Phase heraus- und auf die Haare bzw. die textile Faser gedrängt wird. Eine wissenschaftliche Erklärung für diese Beobachtung gibt es jedoch derzeit nicht.

Die Limonenal und Dihydromyrcenol enthaltenden tensidhaltigen Produkte zeigen eine überraschend erhöhte Substantivität bzw. Retention gegenüber Haar, Wolle, Baumwolle sowie anderen Textilfasern.

Die Erfindung betrifft auch die Verwendung von Limonenal zur Erhöhung der Substantivität von Dihydromyrcenol.

Die folgenden Beispiele dienen der Erläuterung der Erfindung:

### Beispiele 1-3

### Vorbemerkung:

Die Eigenschaften "Substantivität" und "Blooming" wurden in den nachfolgenden Beispielen 1-3 durch ein Experten-Panel (8-12 Personen) evaluiert.

Für die Bestimmung der Substantivität wurde unparfümierte Weichspülermasse, Shampoomasse oder Waschpulver mit einer erfindungsgemäßen Parfümkomposition bestehend aus Limonenal und Dihydromyrcenol im Gewichtsverhältnis 15:85 beziehungsweise mit der als Vergleich herangezogenen Substanz Dihydromyrcenol in üblicher Konzentration parfümiert. Für die geruchliche Beurteilung wurde eine 7-Punkte Skala genutzt, in der von 0 (ohne Geruch) bis 6 (sehr starker Geruch) bewertet wird.

Für die Beurteilung des Bloomings wurde eine schwach tensidhaltige wässrige Lösung mit 0,1% der besagten erfindungsgemäßen Parfümkomposition bestehend aus Limonenal und Dihydromyrcenol beziehungsweise mit der als Vergleich herangezogenen Substanz Dihydromyrcenol versetzt. Für die geruchliche Beurteilung wurde eine 7-Punkte Skala genutzt, in der von 0 (ohne Geruch) bis 6 (sehr starker Geruch) bewertet wird.

Die Bestimmung der Eigenschaft "Stabilität" erfolgte anhand der verbleibenden Menge (in %) der zu untersuchenden Riechstoffe nach einer Lagerzeit von 1 (1M) bzw. 2 Monaten (2M) bei einer konstanten Temperatur von 40°C in den jeweiligen gebrauchsfertigen Formulierungen (d.h. nach Einarbeitung des jeweiligen Riechstoffs in die betreffende Grundmasse) der nachfolgenden Beispiele.

### Bestimmung der Substantivität (Beispiele 1-3) und Stabilität (Beispiele 1 und 3)

### Beispiel 1

### Shampoo

Die jeweils zu evaluierende Substanz wurde als 50 Gew.%-ige Lösung in Diethylphthalat eingesetzt; die Lösung wurde in einer Dosierung von 0,6 Gew.-% in eine Shampoo-Grundmasse folgender Zusammensetzung eingearbeitet:

| | |
|---|---|
| Natriumlaurylethersulfat | 12% |
| (z.B. Texapon NSO, Fa. Cognis Deutschland GmbH) | |
| Cocamidopropylbetain | 2% |
| (z.B. Dehyton K, Fa. Cognis Deutschland GmbH) | |
| Natriumchlorid | 1,4% |
| Citronensäure | 1,3% |
| Phenoxyethanol, Methyl-, Ethyl-, Butyl-, | |
| und Propylparaben | 0,5% |
| Wasser | 82,8% |

Der pH-Wert der Shampoo-Grundmasse lag bei etwa 6. Hieraus werden 100 mL einer 20 Gew. %-igen wässrigen Shampoo-Lösung (als Beispiel einer erfindungsgemäßen Lösung) hergestellt. In dieser Shampoo-Lösung werden 2 Haarsträhnchen gemeinsam für 2 Minuten gewaschen und anschließend 20 Sekunden unter fließendem handwarmen Wasser gespült. Eine Haarsträhne wird nass in Aluminiumfolie eingepackt und die zweite Haarsträhne mit einem Fön getrocknet. Beide Haarsträhnen werden von einem Panel geruchlich beurteilt.

| Zu evaluierende Substanz | Bewertung Substantivität | | Stabilität |
|---|---|---|---|
| | nass | trocken | |
| Mischung aus Limonenal und Dihydromyrcenol im Gewichtsverhältnis 15:85 (erfindungsgemäß) | 3,0 | 2,2 | 1M: 100% |
| Dihydromyrcenol | 2,5 | 0,9 | 1 M: 96% |
| | | | |
| (Vergleich) | | | 2M: 88% |

Der Einsatz von Limonenal in der erfindungsgemäßen Mischung führte zu einer Erhöhung der Substantivität des Dihydromyrcenol.

### Beispiel 2

### Weichspüler

Die zu evaluierende Substanz wird als 50 Gew.%-ige Lösung in Diethylphthalat eingesetzt; die Lösung wird in einer Dosierung von 0,5 Gew.-% in eine Weichspüler-Grundmasse folgender Zusammensetzung eingearbeitet:

| | |
|---|---|
| Quarternäres Ammoniummethosulfat (Esterquat), ca. 90% | 5,5% |
| (z.B. Rewoquat WE 18, Fa. Witco Surfactants GmbH) | |
| Alkyldimethylbenzylammoniumchlorid, ca. 50% | 0,2% |
| (z.B. Preventol R50, Fa. Bayer AG) | |
| Farblösung, ca. 1%-ig | 0,3% |
| Wasser | 94,0% |

Der pH-Wert der Weichspüler-Grundmasse lag im Bereich 2 - 3. Zwei Stofflappen werden mit 370 g einer aus der Grundmasse hergestellten 1%-igen wässrigen Weichspüler-Lösung (als Beispiel einer erfindungsgemäßen Lösung) in einer Linetest-Maschine im Weichspülprogramm 30 Minuten bei 20°C gespült. Die Lappen werden ausgewrungen und anschließend 20 Sekunden geschleudert. Ein Lappen wird nass eingeschweißt, und einer zum Trocknen aufgehängt. Anschließend werden beide Lappen durch ein Panel geruchlich beurteilt.

| Zu evaluierende Substanz | Bewertung Substantivität | |
|---|---|---|
| | nass | trocken |
| Mischung aus Limonenal und Dihydromyrcenol im Gewichtsverhältnis 15:85 (erfindungsgemäß) | 2,8 | 1,8 |
| Dihydromyrcenol | 1,6 | 0,7 |
| | | |
| (Vergleich) | | |

Der Einsatz von Limonenal in der erfindungsgemäßen Mischung führte zu einer Erhöhung der Substantivität des Dihydromyrcenol.

### Beispiel 3

### Waschpulver

Die zu evaluierende Substanz wird als 50 Gew.%-ige Lösung in Diethylphthalat eingesetzt; die Lösung wird in einer Dosierung von 0,4 Gew.-% in eine Waschpulver-Grundmasse der folgenden Rezeptur eingearbeitet:

| | |
|---|---|
| Lineares Na-Alkylbenzolsulfonat | 8,8 % |
| Ethoxylierter Fettalkohol C12-18 (7 EO) | 4,7 % |
| Na-Seife | 3,2 % |
| Entschäumer | |
| DOW CORNING(R) 2-4248S | |
| POWDERED ANTIFOAM, | |
| Silikonöl auf Zeolith als Trägermaterial | 3,9 % |
| Zeolith 4A | 28,3 % |
| Na-Carbonat | 11,6 % |
| Na-Salz eines Copolymers aus Acryl- | |
| und Maleinsäure (Sokalan CP5) | 2,4 % |
| Na-Silikat | 3,0 % |
| Carboxymethylcellulose | 1,2 % |
| Dequest 2066 | 2,8 % |
| ([[(Phosphonomethyl)imino]bis[(ethylennitrilo)bis | |
| (methylen)]]tetrakis-phosphonsäure, Natriumsalz) | |
| Optischer Aufheller | 0,2 % |
| Na-Sulfat | 6,5 % |
| Protease | 0,4 % |
| Natriumperborattetrahydrat | 22,0 % |
| TAED | 1,0 % |

Zwei Stofflappen werden mit 370 g einer aus der Grundmasse hergestellten 1%- igen wässrigen Waschpulverlauge (als Beispiel einer erfindungsgemäßen tensidhaltigen Lösung; der pH-Wert der Waschpulverlauge liegt deutlich im basischen Bereich) in einer Linetest-Maschine im Hauptwaschgang 45 Minuten bei 60°C gewaschen. Die Lappen werden zunächst 5 Minuten mit kaltem Wasser gespült, ausgewrungen und anschließend 20 Sekunden geschleudert. Ein Lappen wird nass eingeschweißt, und einer zum Trocknen aufgehängt. Anschließend werden beide Lappen durch ein Panel geruchlich beurteilt.

| Zu evaluierende Substanz | Bewertung Substantivität | | Stabilität |
|---|---|---|---|
| | nass | trocken | |
| Mischung aus Limonenal und Dihydromyrcenol im Gewichtsverhältnis 15:85 (erfindungsgemäß) | 2,5 | 1,8 | 1M: 99% |
| | | | |
| | | | 2M: 98% |
| Dihydromyrcenol | 1,3 | 0,6 | 1 M: 98% |
| | | | |
| (Vergleich) | | | 2M: 98% |

Der Einsatz von Limonenal in der erfindungsgemäßen Mischung führte zu einer Erhöhung der Substantivität des Dihydromyrcenol.

### Bestimmung des Blooming (Beispiel 4)

### Beispiel 4

Das Blooming der Shampoo-Lösung aus Beispiel 1, der Weichspüler-Lösung aus Beispiel 2 und der Waschpulverlauge aus Beispiel 3 wurden jeweils aus einem offenen 250 mL Becherglas heraus durch ein Panel auf einer Skala von 0 - 6 beurteilt.

| Zu evaluierende Substanz | Shampoo-Lösung (Beispiel 1) |
|---|---|
| Mischung aus Limonenal und Dihydromyrcenol im Gewichtsverhältnis 15:85 (erfindungsgemäß) | 4,0 |
| Dihydromyrcenol | 3,4 |
| | |
| (Vergleich) | |

| Zu evaluierende Substanz | Weichspüler-Lösung (Beispiel 2) |
|---|---|
| Mischung aus Limonenal und Dihydromyrcenol im Gewichtsverhältnis 15:85 (erfindungsgemäß) | 4,4 |
| Dihydromyrcenol | 3,5 |
| | |
| (Vergleich) | |

| Zu evaluierende Substanz | Waschpulverlauge (Beispiel 3) |
|---|---|
| Mischung aus Limonenal und Dihydromyrcenol im Gewichtsverhältnis 15:85 (erfindungsgemäß) | 3,3 |
| Dihydromyrcenol | 2,7 |
| | |
| (Vergleich) | |

Der Einsatz von Limonenal in der erfindungsgemäßen Mischung führte jeweils zu einer Erhöhung des Blooming des Dihydromyrcenol

### Parfümkompositionen:

### Verwendete Abkürzungen:

DPG: Dipropylenglycol, IPM: Isopropylmyristat

### Beispiel 5: Parfümkomposition / Parfümöl:

### Beispiel 5:

Parfümöl, insbesondere geeignet für die Einarbeitung in Shampoo.

| | |
|---|---|
| Allylamylglycolat | 4,00 |
| Calone 1951 | 1,00 |
| Canthoxal | 2,00 |
| Cassis 345B | 2,00 |
| Cedernblätteröl | 2,00 |
| Cedernholzöl | 5,00 |
| Cypressenöl | 7,00 |
| Damascon alpha | 0,50 |
| Eugenol | 8,00 |
| Evernyl | 0,50 |
| Fleursandol | 40,00 |
| Florazon | 5,00 |
| Galaxolid 50% in DEP | 35,00 |
| Grapefruit Base | 3,00 |
| Hedion | 288,0 |
| Helional | 60,00 |
| Hexenol cis-3 | 2,00 |
| Iso E Super | 50,00 |
| Lavandinöl Abrialis Nat. | 15,00 |
| Lemon Oil Winter Italie | 20,00 |
| Ligustral | 2,00 |
| Lilial | 20,00 |
| Mandarinenöl Super | 20,00 |
| Orangenöl Brasilianisch | 15,00 |
| Patchuliöl Entf. DM | 10,00 |
| Rosmarinöl, Typ span. | 5,00 |
| Salbeiöl Dalm. | 3,00 |
| Sandranol ® | 5,00 |
| Tonalid | 10,00 |
| Dihydromyrcenol | 306,00 |
| 3-(4-Methyl-cyclohex-3-enyl)-butyraldehyd (Limonenal) | 54,00 |
| **TOTAL** | **1000,00** |

In Vergleich mit einer Mischung, die anstelle der insgesamt 280 Gewichtsteile Dihydromyrcenol und 3-(4-Methyl-cyclohex-3-enyl)-butyraldehyd (Limonenal) 280 Gewichtsteile Bergamottöl enthielt, wies das obige Dihydromyrcenol und Limonenal enthaltende Parfümöl eine merklich natürlichere und spritzigere citrische Kopfnote auf, zudem konnte eine bessere Haftung der Kopfnote festgestellt werden.

## Patentansprüche

1. Mischung umfassend oder bestehend aus
7,5 bis 27,5 Gewichtsteilen 3-(4-Methyl-cyclohex-3-enyl)-butyraldehyd (Limonenal) und
92,5 bis 72,5 Gewichtsteilen 2,6-Dimethyl-7-octen-2-ol (Dihydromyrcenol),
wobei die Summe der Gewichtsteile an 3-(4-Methyl-cyclohex-3-enyl)-butyraldehyd und 2,6-Dimethyl-7-octen-2-ol 100 beträgt.

2. Mischung nach Anspruch 1, umfassend oder bestehend aus
12,5 bis 20 Gewichtsteilen 3-(4-Methyl-cyclohex-3-enyl)-butyraldehyd (Limonenal) und
87,5 bis 80 Gewichtsteilen 2,6-Dimethyl-7-octen-2-ol (Dihydromyrcenol).

3. Mischung nach einem der Ansprüche 1 oder 2, wobei die Mischung eine Parfümkomposition ist, umfassend oder bestehend aus:
3-(4-Methyl-cyclohex-3-enyl)-butyraldehyd (Limonenal), 2,6-Dimethyl-7-octen-2-ol (Dihydromyrcenol)
sowie einem, mehreren oder sämtlichen weiteren Bestandteilen ausgewählt aus der Gruppe bestehend aus:
- Riechstoffe, vorzugsweise in einer Menge von 100 oder mehr Gewichtsteilen, und
- Fixateure.

4. Mischung nach einem der vorangehenden Ansprüche, umfassend eine Gesamtmenge an 3-(4-Methyl-cyclohex-3-enyl)-butyraldehyd (Limonenal) und 2,6-Dimethyl-7-octen-2-ol (Dihydromyrcenol), welche eine Bergamott-Geruchsnote vermittelt, verstärkt oder modifiziert.

5. Mischung nach einem der vorangehenden Ansprüche, nicht umfassend Dihydrocuminalkohol und/oder Linalool und/oder 3-(4-Methyl-cyclohexyl)-butyraldehyd.

6. Produkt umfassend eine Mischung nach einem der vorangehenden Ansprüche.

7. Produkt nach Anspruch 6, wobei das Produkt ein tensidhaltiges Produkt ist.

8. Produkt nach Anspruch 6 oder 7, wobei das Produkt ist:
- ein saures, alkalisches oder neutrales Reinigungsmittel, vorzugsweise ausgewählt aus der Gruppe bestehend aus Allzweckreinigern, Fußbodenreinigern, Fensterglasreinigern, Geschirrspülmittel, Bad- und Sanitärreinigern, Scheuermilch, festen und flüssigen WC-Reinigern, pulver- und schaumförmigen Teppichreinigern, flüssigen Waschmitteln, pulverförmigen Waschmitteln, Wäschevorbehandlungsmitteln wie Bleichmittel, Einweichmittel und Fleckenentfernern, Wäscheweichspülern, Waschseifen, Waschtabletten, Desinfektionsmitteln, Oberflächendesinfektionsmitteln,
- ein Luftverbesserer in flüssiger, gelartiger oder auf einem festen Träger aufgebrachter Form oder als Aerosolspray,
- ein Wachs oder eine Politur, vorzugsweise ausgewählt aus der Gruppe bestehend aus Möbelpolituren, Fußbodenwachsen und Schuhcremes, oder
- ein Körperpflegemittel, vorzugsweise ausgewählt aus der Gruppe bestehend aus festen und flüssigen Seifen, Duschgelen, Shampoos, Rasierseifen, Rasierschäumen, Badeölen, kosmetischen Emulsionen vom Öl-in-Wasser-, vom Wasser-in-Öl- und vom Wasser-in-Öl-in-Wasser-Typ, Haarpflegeprodukten, Deodorantien und Antiperspirantien und Produkten der dekorativen Kosmetik.

9. Verwendung einer Mischung nach einem der Ansprüche 1 bis 5
- zum Nachstellen oder Vermitteln des Geruches von Bergamottöl oder
- als Mittel zum Versehen von (a) Haaren oder (b) textilen Fasern mit dem Geruch von Bergamottöl.

10. Verwendung nach Anspruch 9, wobei die Mischung als Bestandteil eines Produktes nach einem der Ansprüche 6 bis 8 eingesetzt wird.

11. Verfahren
(i) zum Verstärken der citrischen, bergamott-artigen Kopfnote und der Natürlichkeit des Geruchs von 2,6-Dimethyl-7-octen-2-ol (Dihydromyrcenol) und/oder
(ii) zur Herstellung einer den Geruch von Bergamottöl nachstellenden oder vermittelnden Mischung nach einem der vorangehenden Ansprüche 1 bis 5, mit folgenden Schritten:
- Bereitstellen von 3-(4-Methyl-cyclohex-3-enyl)-butyraldehyd (Limonenal) und 2,6-Dimethyl-7-octen-2-ol (Dihydromyrcenol),
- Vermischen von
7,5 bis 27,5 Gewichtsteilen 3-(4-Methyl-cyclohex-3-enyl)-butyraldehyd (Limonenal) und
92,5 bis 72,5 Gewichtsteilen 2,6-Dimethyl-7-octen-2-ol (Dihydromyrcenol), vorzugsweise
12,5 bis 20 Gewichtsteilen 3-(4-Methyl-cyclohex-3-enyl)-butyraldehyd (Limonenal) und
87,5 bis 80 Gewichtsteilen 2,6-Dimethyl-7-octen-2-ol (Dihydromyrcenol),
wobei die Summe der Gewichtsteile an 3-(4-Methyl-cyclohex-3-enyl)-butyraldehyd und 2,6-Dimethyl-7-octen-2-ol 100 beträgt.

12. Verfahren zum Versehen von (a) Haaren oder (b) textilen Fasern mit dem Geruch von Bergamottöl, mit folgenden Schritten:
- Bereitstellen einer Mischung nach einem der Ansprüche 1 bis 5 oder eines Produktes nach einem der Ansprüche 6 bis 8,
- Applizieren der Mischung bzw. des Produktes auf das Haar oder die textilen Fasern.

13. Verwendung von Limonenal zur Erhöhung der Substantivität und/oder des Blooming von Dihydromyrcenol.

## Claims

1. Mixture comprising or consisting of
7.5 to 27.5 parts by weight of 3-(4-methyl-cyclohex-3-enyl)-butyraldehyde (limonenal) and
92.5 to 72.5 parts by weight of 2,6-dimethyl-7-octen-2-ol (dihydromyrcenol),
wherein the sum of the parts by weight of 3-(4-methyl-cyclohex-3-enyl)-butyraldehyde and 2,6-dimethyl-7-octen-2-ol is 100.

2. Mixture according to claim 1, comprising or consisting of
12.5 to 20 parts by weight of 3-(4-methyl-cyclohex-3-enyl)-butyraldehyde (limonenal) and
87.5 to 80 parts by weight of 2,6-dimethyl-7-octen-2-ol (dihydromyrcenol).

3. Mixture according to one of claims 1 or 2, wherein the mixture is a perfume composition, comprising or consisting of:
3-(4-methyl-cyclohex-3-enyl)-butyraldehyde (limonenal),
2,6-dimethyl-7-octen-2-ol (dihydromyrcenol)
and one, several or all of the further constituents chosen from the group consisting of:
- odoriferous substances, preferably in an amount of 100 or more parts by weight, and
- fixatives.

4. Mixture according to one of the preceding claims, comprising a total amount of 3-(4-methyl-cyclohex-3-enyl)-butyraldehyde (limonenal) and 2,6-dimethyl-7-octen-2-ol (dihydromyrcenol) which imparts, intensifies or modifies a bergamot olfactory note.

5. Mixture according to one of the preceding claims, which does not comprise dihydrocuminyl alcohol and/or linalool and/or 3-(4-methyl-cyclohexyl)-butyraldehyde.

6. Product comprising a mixture according to one of the preceding claims.

7. Product according to claim 6, wherein the product is a surfactant-containing product.

8. Product according to claim 6 or 7, wherein the product is:
- an acidic, alkaline or neutral cleaning composition, preferably chosen from the group consisting of all-purpose cleaners, floor cleaners, window glass cleaners, dishwashing agents, bath and sanitary cleaners, scouring cream, solid and liquid WC cleaners, carpet cleaning powders and foams, liquid detergents, powdered detergents, laundry pretreatment agents, such as bleaches, soaking agents and stain removers, laundry softeners, washing soaps, washing tablets, disinfectants, surface disinfectants,
- an air freshener in liquid or gel form or in a form applied to a solid carrier or as an aerosol spray,
- a wax or a polish, preferably chosen from the group consisting of furniture polishes, floor waxes and shoe creams, or
- a body care composition, preferably chosen from the group consisting of solid and liquid soaps, shower gels, shampoos, shaving soaps, shaving foams, bath oils, cosmetic emulsions of the oil-in-water, of the water-in-oil and of the water-in-oil-in-water type, hair care products, deodorants and antiperspirants and decorative cosmetic products.

9. Use of a mixture according to one of claims 1 to 5
- for adjusting or imparting the smell of bergamot oil or
- as an agent for providing (a) hair or (b) textile fibres with the smell of bergamot oil.

10. Use according to claim 9, wherein the mixture is employed as a constituent of a product according to one of claims 6 to 8.

11. Method
(i) for intensifying the citric, bergamot-like head note and the naturalness of the smell of 2,6-dimethyl-7-octen-2-ol (dihydromyrcenol) and/or
(ii) for the preparation of a mixture according to one of the preceding claims 1 to 5 which adjusts or imparts the smell of bergamot oil, with the following steps:
- provision of 3-(4-methyl-cyclohex-3-enyl)-butyraldehyde (limonenal) and 2,6-dimethyl-7-octen-2-ol (dihydromyrcenol),
- mixing of
7.5 to 27.5 parts by weight of 3-(4-methyl-cyclohex-3-enyl)-butyraldehyde (limonenal) and
92.5 to 72.5 parts by weight of 2,6-dimethyl-7-octen-2-ol (dihydromyrcenol),
preferably
12.5 to 20 parts by weight of 3-(4-methyl-cyclohex-3-enyl)-butyraldehyde (limonenal) and
87.5 to 80 parts by weight of 2,6-dimethyl-7-octen-2-ol (dihydromyrcenol),
wherein the sum of the parts by weight of 3-(4-methyl-cyclohex-3-enyl)-butyraldehyde and 2,6-dimethyl-7-octen-2-ol is 100.

12. Method for providing (a) hair or (b) textile fibres with the smell of bergamot oil, with the following steps:
- provision of a mixture according to one of claims 1 to 5 or of a product according to one of claims 6 to 8,
- application of the mixture or of the product to the hair or the textile fibres.

13. Use of limonenal for increasing the substantivity and/or the blooming of dihydromyrcenol.

## Revendications

1. Mélange comprenant ou constitué de:
7,5 à 27,5 parties en poids de 3-(4-Méthyl-cyclohex-3-ényl)-butyraldéhyde (Limonénal) et
92,5 à 72,5 parties en poids de 2,6-Diméthyl-7-octèn-2-ol (Dihydromyrcénol)
la somme des parties en poids de 3-(4-Méthyl-cyclohex-3-ényl)-butyraldéhyde et 2,6-Diméthyl-7-octèn-2-ol est 100.

2. Mélange selon la revendication 1, comprenant ou constitué de:
12,5 à 20 parties en poids de 3-(4-Méthyl-cyclohex-3-ényl)-butyraldéhyde (Limonénal) et
87,5 à 80 parties en poids de 2,6-Diméthyl-7-octèn-2-ol (Dihydromyrcénol).

3. Mélange selon l'une des revendications 1 ou 2, le mélange étant une composition de parfum comprenant ou constituée de :
3-(4-Méthyl-cyclohex-3-ényl)-butyraldéhyde (Limonénal), 2,6-Diméthyl-7-octèn-2-ol (Dihydromyrcénol)
et un, plusieurs, ou tous les autres constituants choisis dans le groupe constitué de:
- substances odorantes, de préférence dans une quantité de 100 parties en poids ou plus, et de
- fixateurs.

4. Mélange selon l'une des revendications précédentes, comprenant une quantité totale de 3-(4-Méthyl-cyclohex-3-ényl)-butyraldéhyde (Limonénal) et 2,6-Diméthyl-7-octèn-2-ol (Dihydromyrcénol), ayant, renforçant ou modifiant une note d'odeur de bergamote.

5. Mélange selon l'une des revendications précédentes, ne comprenant pas d'alcool dihydrocuminique et/ou de linalol et/ou de 3-(4-Méthyl-cyclohexyl)-butyraldéhyde.

6. Produit comprenant un mélange selon l'une des revendications précédentes.

7. Produit selon la revendication 6, le produit étant un produit contenant des agents tensioactifs.

8. Produit selon la revendication 6 ou 7, le produit étant:
- un produit nettoyant acide, alcalin ou neutre, de préférence choisi dans le groupe constitué de nettoyants polyvalents, nettoyants pour sols, nettoyants pour vitres, nettoyants pour vaisselle, nettoyants pour sanitaires et salle de bains, crèmes à récurer, nettoyants pour toilettes sous forme solide ou liquide, nettoyants pour tapis sous forme de poudre ou de mousse, détergents liquides, détergents sous forme de poudre, produits de prélavage comme par exemple agents de blanchiment, produits de trempage et détachants, adoucissants, savons, tablettes de lessive, produits de désinfection, produits de désinfection de surfaces,
- un assainissant d'air ambiant sous forme liquide, de gel ou installé sur un support solide ou bien sous forme de spray aérosol,
- une cire ou une encaustique, de préférence choisie dans le groupe constitué des encaustiques pour meubles, cires pour parquets et cirages pour chaussures, ou
- un produit de soins corporels, de préférence choisi dans le groupe constitué de savons sous forme solide ou liquide, gels douche, shampoings, savons à raser, mousses à raser, huiles de bain, émulions cosmétiques du type huile-dans-eau, eau-dans-huile et eau-dans-huile-dans-eau, produits de soins capillaires, déodorants et antitranspirants et des produits de cosmétique décorative.

9. Utilisation d'un mélange selon l'une des revendications 1 à 5
- pour reproduire ou procurer une odeur d'huile de bergamote ou
- comme moyen pour conférer (a) aux cheveux ou (b) a des fibres textiles l'odeur de bergamote.

10. Utilisation selon la revendication 9, dans laquelle le mélange est employé en tant que composant d'un produit selon l'une des revendications 6 à 8.

11. Procédé
(i) pour renforcer la note de tête citronnée de type bergamote ct le naturel de l'odeur de 2,6-Diméthyl-7-octèn-2-ol (Dihydromyrcénol) et/ou
(ii) pour fabriquer un mélange reproduisant ou fournissant l'odeur d'huile de bergamote selon l'une des revendications précédentes 1 à 5, avec les étapes suivantes :
- fournir du 3-(4-Méthyl-cyclohex-3-ényl)-butyraldéhyde (Limonénal) et 2,6-Diméthyl-7-octèn-2-ol (Dihydromyrcénol),
- mélanger 7,5 à 27,5 parties en poids de 3-(4-Méthyl-cyclohex-3-ényl)-butyraldéhyde (Limonénal) et
92,5 à 72,5 parties en poids de 2,6-Diméthyl-7-octèn-2-ol (Dihydromyrcénol), de préférence
12,5 à 20 parties en poids de 3-(4-Méthyl-cyclohex-3-ényl)-butyraldéhyde (Limonénal) et
87,5 à 80 parties en poids de 2,6-Diméthyl-7-octèn-2-ol (Dihydromyrcénol), la somme des parties en poids de 3-(4-Méthyl-cyclohex-3-ényl)-butyraldéhyde et 2,6-Diméthyl-7-octèn-2-ol est 100.

12. Procédé pour procurer (a) a des cheveux ou (b) à des fibres textiles l'odeur de l'huile de bergamote, avec les étapes suivantes :
- fournir un mélange selon l'une des revendications 1 à 5 ou d'un produit selon l'une des revendications 6 à 8,
- appliquer le mélange ou le produit sur les cheveux ou sur les fibres textiles.

13. Utilisation de Limonénal pour augmenter la substantivité et/ou le blooming du Dihydromyrcénol.
